# EUROPEAN PATENT APPLICATION

(11) **EP 2 845 793 A1**
(43) Date of publication of application: **11.03.2015**
(21) Application number: 13183324.6
(22) Date of filing: 06.09.2013
(51) Int. Cl.: B63G 8/00

(54) **Apparatus and method for deploying an object to a sea floor**

(71) Applicant: Soil Machine Dynamics Limited, Tyne and Wear NE28 6UZ (GB)
(72) Inventor: The designation of the inventor has not yet been filed
(74) Representative: Vinsome, Rex Martin

(57) **Abstract**

A deployment apparatus (2) for deploying an object to a sea floor comprises a body (4) and an attachment part (14) mounted to the body for releasably attaching an object to the apparatus. Thrusters (18, 20) provide thrust to transport the apparatus having an object attached thereto, and inflatable tanks 10, 12) mounted to the body have adjustable buoyancy.

## Description

The present invention relates to an apparatus and method for deploying an object to a sea floor, and relates particularly, but not exclusively, to an apparatus and method for deploying an implement or structure to a sea floor from a vessel through sea ice.

It is known to deploy structures or implements to the seabed through sea ice, for example in Arctic regions, by connecting guide wires extending from an aperture in a deck of an icebreaker vessel to the seabed, and then guiding the structure or implement into position along the guide wires. However, this arrangement suffers from the drawback that the location of the structure or implement on the seabed can only be within a limited lateral distance of the region of the seabed directly below the vessel. This in turn limits the range of applications in which the structure or implement can be used.

Preferred embodiments of the present invention seek to overcome one or more of the above disadvantages of the prior art.

According to an aspect of the present invention, there is provided an apparatus for deploying an object to a sea floor, the apparatus comprising:-
a body;
attachment means mounted to the body for releasably attaching an object to the apparatus;
thrust generating means mounted to the body for providing thrust to transport the apparatus having an object attached thereto; and
buoyant means mounted to said body and having adjustable buoyancy.

By providing thrust generating means for providing thrust to transport the apparatus having an object attached thereto, and buoyant means having adjustable buoyancy, this provides the advantage of enabling the apparatus with an object releasably attached thereto to be transported from a vessel to a first location on the seabed by means of a cable, and then to a second location on the seabed by means of the thrust generating means subsequently to increasing the buoyancy of the combined apparatus and object by increasing the buoyancy of the buoyant means. This in turn provides the advantage of enabling objects to be deployed to subsea locations laterally further from the location of a vessel than is presently possible, thereby enabling deployment to a wider range of locations.

The buoyant means may comprise at least one tank adapted to be filled with air and/or gas.

At least one said tank may be adapted to be filled with air and/or gas by means of a conduit connected to a vessel located at the sea surface.

The apparatus may further comprise at least one conduit adapted to be releasably connected to at least one said tank for filling said tank with air and/or gas from a vessel located at the sea surface.

The apparatus may further comprise release means for releasing at least one said conduit from the corresponding said tank.

This provides the advantage of avoiding the need for a remotely operated vehicle for releasing the conduit.

The buoyant means may comprise at least one buoyant member adapted to be moved between a respective first position, for transport from a vessel to said first location, and a second position, for transport from said first location to a second location on the sea floor.

This provides the advantage of enabling the lateral dimensions of the apparatus to be minimised while passing through an aperture on the vessel, thereby maximising the size and payload of the apparatus that can be used for a given vessel aperture size. The advantage is also provided of enabling the buoyant members to be located in respective lower positions before the buoyancy is increased, and at respective higher positions subsequently to the buoyancy being increased, thereby contributing to stability of the apparatus during deployment.

At least one said buoyant member may be pivotable between said first and second positions.

The apparatus may further comprise power supply means for operating at least one implement releasably mountable to said attachment means.

The power supply means may comprise at least one hydraulic power unit.

The apparatus may further comprise at least one implement adapted to be releasably attached to said attachment means.

The implement may comprise sea floor removal means and/or locating means for locating at least one elongate object in a trench.

According to another aspect of the present invention, there is provided a method of deploying an object to a sea floor, the method comprising:-
attaching an object to attachment means of an apparatus as defined above;
deploying the apparatus and object by means of a cable from a vessel to a first location on a sea floor;
increasing buoyancy of said buoyant means; and
moving the object to a second location on the sea floor by means of said thrust generating means.

The method may further comprise deploying said apparatus and object to said first location through an aperture in a vessel located in sea ice.

The method may further comprise deploying said object to the sea floor at said second location by generating downward force on the apparatus by means of said thrust generating means.

This provides the advantage of assisting in locating the object.

The step of increasing said buoyancy may comprise filling at least part of said buoyant means with air and/or gas.

Preferred embodiments of the present invention will now be described, by way of example, and not in any limitative sense, with reference to the accompanying drawings, in which:-
Figure 1 is a schematic view of a deployment apparatus embodying the present invention;
Figure 2 is a schematic perspective view of a first jetting apparatus in a transport condition thereof for use with the apparatus of Figure 1;
Figure 3 is a perspective view of a first chain cutting apparatus in a transport condition thereof for use with the apparatus of Figure 1;
Figure 4 is a side view of the apparatus of Figure 3 in a deployed condition thereof and mounted to the deployment apparatus of Figure 1;
Figure 5 is a side view of the apparatus of Figure 2 in a deployed condition thereof and mounted to the deployment apparatus of Figure 1;
Figure 6 is a perspective view of a first excavator apparatus mounted to the deployment apparatus of Figure 1;
Figure 7 is a front view of a second chain cutter apparatus mounted to the deployment apparatus of Figure 1;
Figure 8 is a perspective view of the chain cutter and deployment apparatus of Figure 7;
Figure 9 is a perspective view of a drilling apparatus mounted to the deployment apparatus of Figure 1;
Figure 10 is a side view of the drilling apparatus and deployment apparatus of Figure 9;
Figure 11 is a perspective view of a rotary cutter mounted to the deployment apparatus of Figure 1;
Figure 12 is a perspective view of a digger head for replacing the rotary cutter of Figure 11;
Figure 13 is a perspective view of a drill for replacing the rotary cutter of Figure 11;
Figure 14 is a perspective view of a well construction skid mounted to the deployment apparatus of Figure 1; and
Figure 15 is a perspective view of a well construction component mounted to the deployment apparatus of Figure 1.

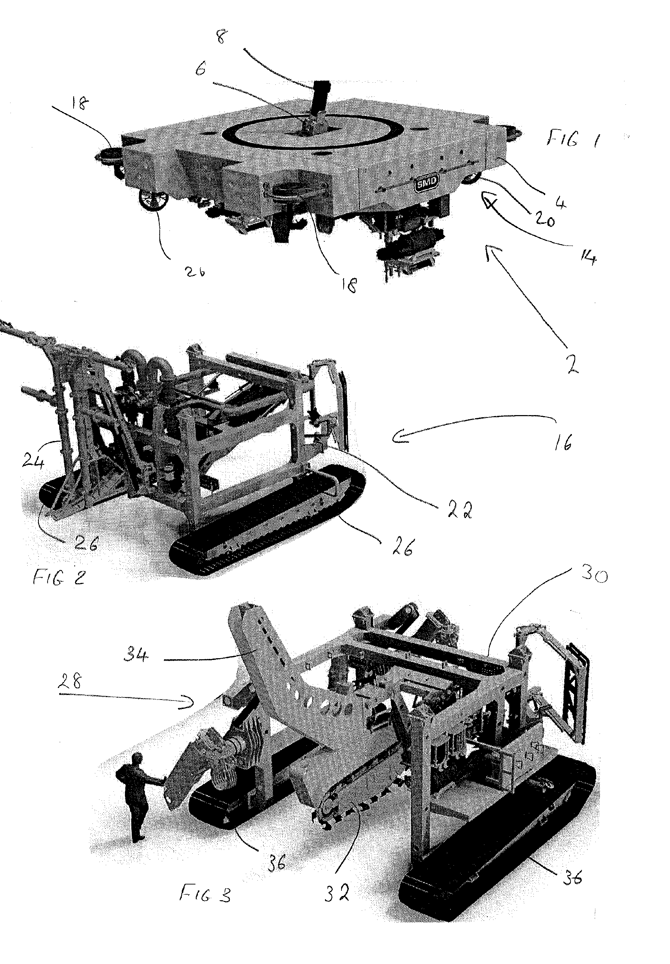

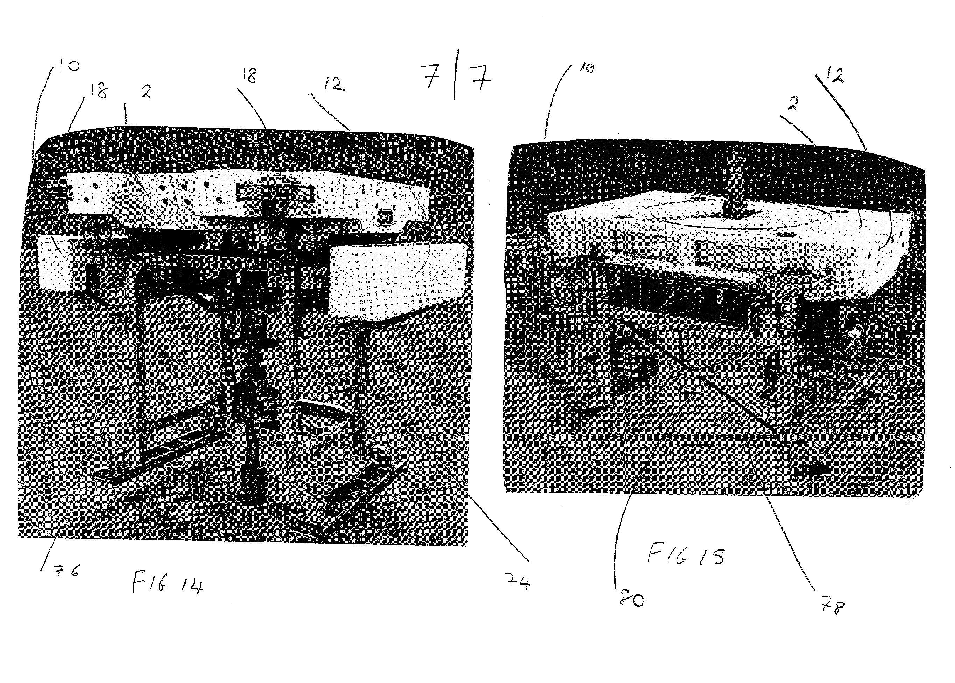

Referring to Figure 1, a deployment apparatus 2 embodying the present invention has a body 4 having an attachment point 6 for a lifting cable 8 and a pair of buoyant members (Figure 14) in the form of inflatable tanks 10, 12 pivotably attached to the body 4 and moveable between a first position, for transporting the apparatus 2 from a surface vessel (not shown) to a first location on the sea bed, as shown in Figure 14, and a second position, for transporting from the first location to a second location on the sea bed, as shown in Figure 15. The deployment apparatus 2 is also provided with an attachment part 14 for enabling releasable attachment of an object or implement such as a jetting vehicle 16 (Figure 2) to the an attachment part 18 for enabling releasable attachment of an implement to the deployment apparatus 2, as well as vertical thrusters 18 and horizontal thrusters 20 arranged at respective corners of the body 4 for moving the apparatus 2 between the first and second locations.

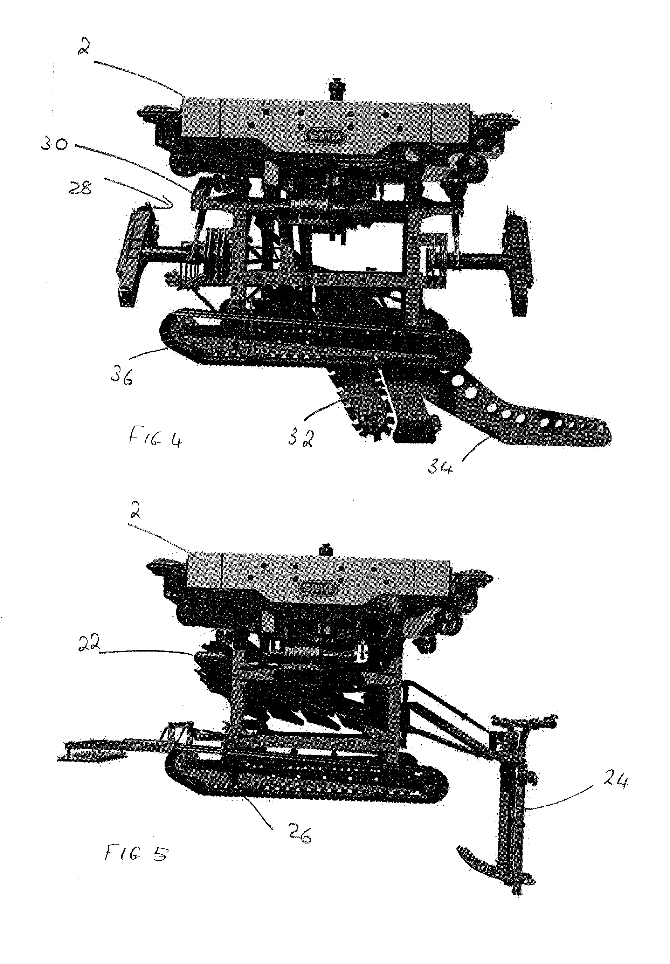

Referring to Figures 2 and 5, tracked jetting vehicle 16 for releasable attachment to the deployment apparatus 2 of Figure 1 has a body 22 having a connector (not shown) for connection to a hydraulic power unit (not shown) provided in the deployment apparatus 2. A jetting device 24 is moveable between a transport position (Figure 2) and a deployment position (Figure 5) for removing debris from a trench to enable location of a cable or pipeline (not shown) into the trench, and a pair of tracks 26 for moving the jetting device 24 along the trench.

Referring now to Figures 3 and 4, a first chain cutting apparatus 28 for locating a cable (not shown) in a trench has a body 30 having an attachment part for removable attachment to the deployment apparatus 2 of Figure 1, and an attachment (not shown) for connection to the hydraulic power unit of the deployment apparatus 2. A chain cutter 32 is mounted to the body 30 and is pivotably moveable between a transport position (Figure 3) and a cutting position (Figure 4) for cutting a trench. A cable guide 34 is pivotably mounted to the body 30 and is moveable between a transport position (Figure 3) and a deployment position (Figure 4) in which it guides a cable into a trench cut by the chain cutter 32. The chain cutter is advanced along the seabed by means of tracks 36 to cut the trench.

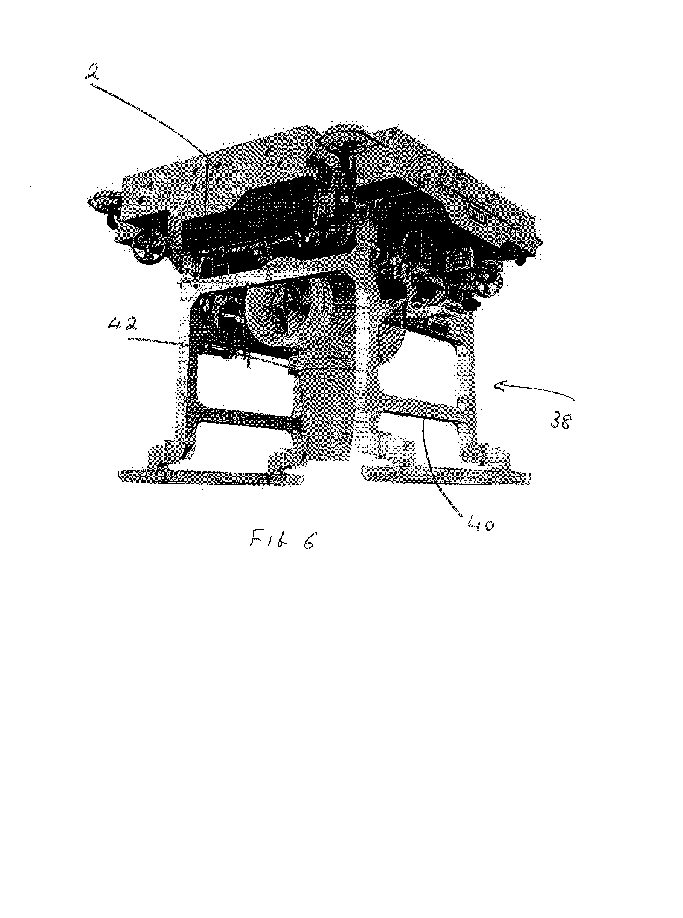

Figure 6 shows a mass flow excavator 38 mounted to the deployment apparatus 2 of Figure 1 and including a body 40 removably mounted to the deployment apparatus 2 and an excavation unit 42 for removing debris from a trench cut by the chain cutting apparatus 28 of Figures 3 and 4 and mounted to the body 40.

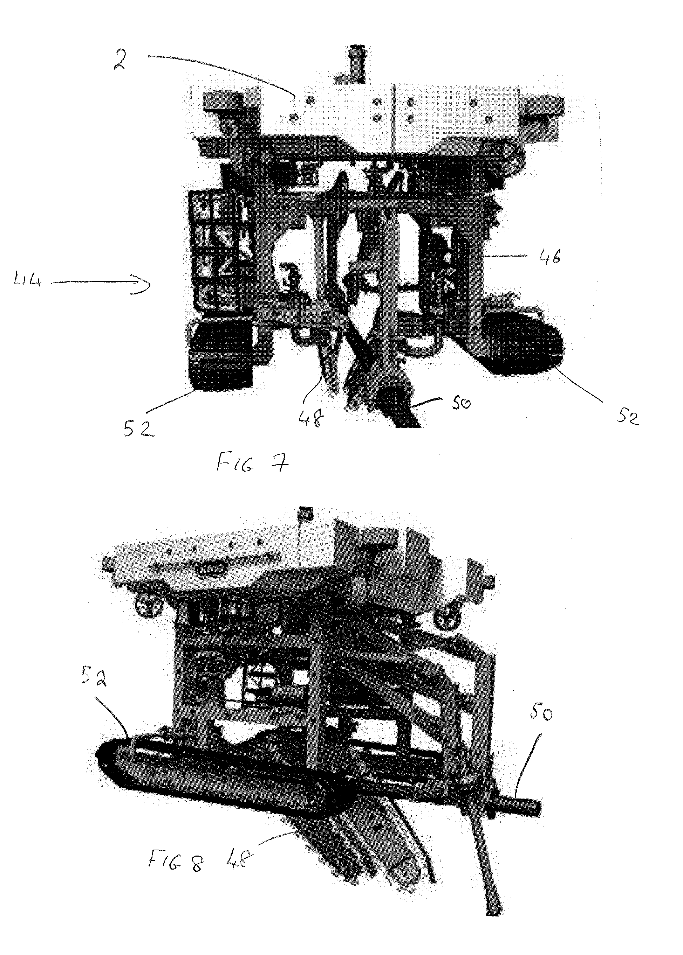

Figures 7 and 8 show a second chain cutting apparatus 44 mounted to the deployment apparatus 2 of Figure 1 and having a body 46 supporting a pair of trench cutters 48 for cutting a trench on opposite sides of a pipeline 50 which is subsequently laid into the trench. The trench cutters 48 are propelled along the trench by means of tracks 52.

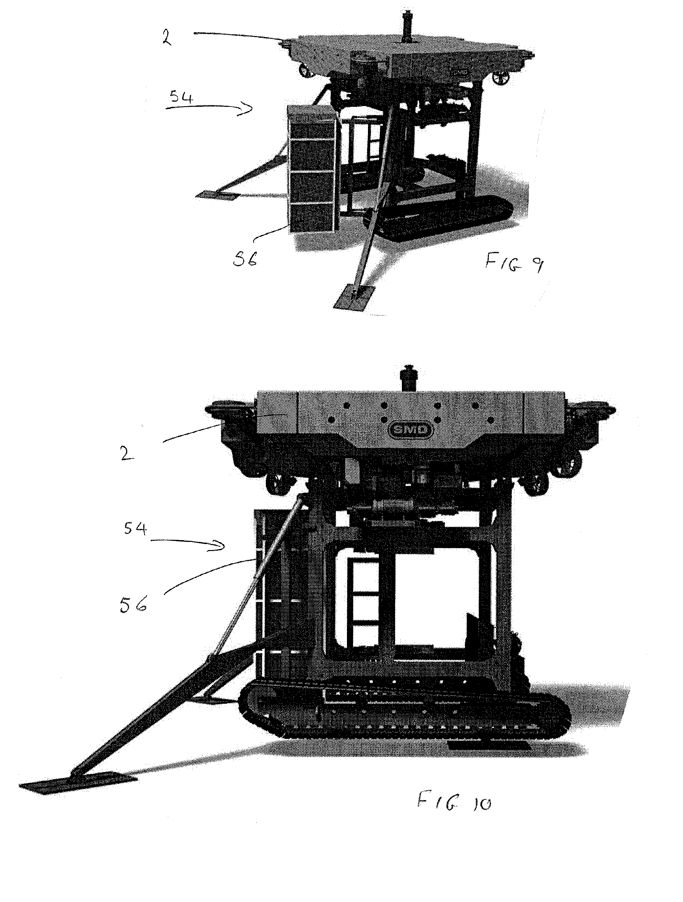

Figures 9 and 10 show a drilling apparatus 54 having a coring drill base 56 to enable core samples to be taken from the seabed. The drilling apparatus 54 is mounted to the deployment apparatus 2 of Figure 1 and comprises a body 58 supporting the drill base 56.

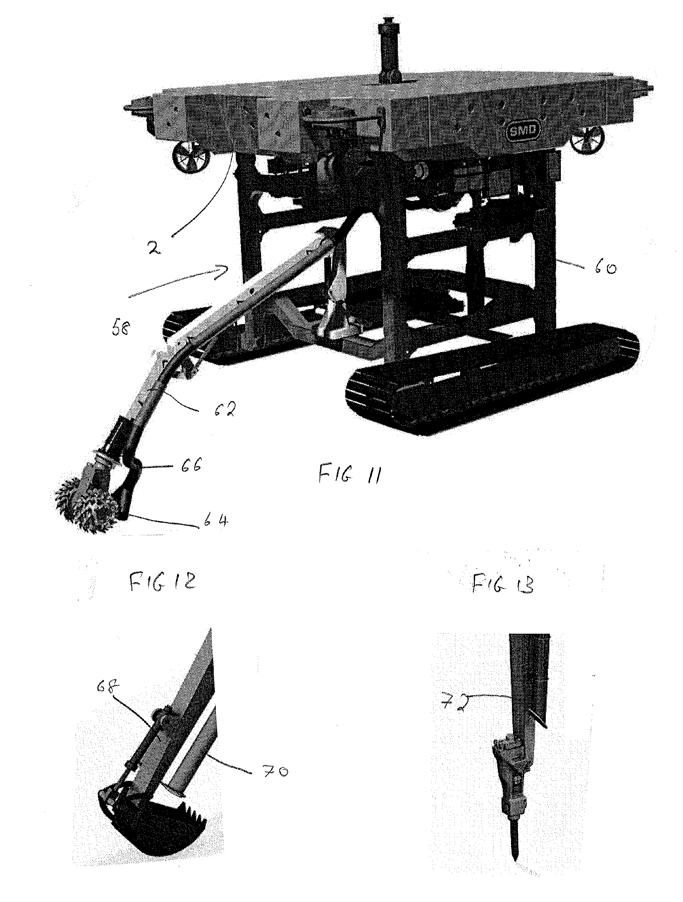

Referring to Figure 11 a rotary cutter apparatus 58 has a body 60 removably connectable to the deployment apparatus 2 of Figure 1 and a manipulator arm 62 connected to the body 60. Rotary cutter heads 64 are mounted to a distal end of the manipulator arm 62, and a suction tube 66 is provided for removal of debris produced by the cutter heads 64. The rotary cutter heads 64 can be replaced by an excavator arm 68 cooperating with a suction tube 70 as shown in Figure 12 or a digger head 72 as shown in Figure 13.

Referring to Figure 14, a well construction skid 74 for use in construction of well heads has a body 76 supporting a well connector 78, the body being 76 removably attachable to the deployment apparatus 2 of Figure 1. In order to mount the well construction skid 74 to the seabed, the well construction skid 74 is attached to the deployment apparatus 2 with the buoyant members 10, 12 in their respective transport positions as shown in Figure 14. The deployment apparatus 2 with the well construction skid 74 mounted thereto is lowered by means of a cable 8 attached to cable attachment point 6 (Figure 1) through an aperture known as a moon pool in an icebreaking vessel, and lowered to a first location on the seabed. When the apparatus 2 reaches its first location, the buoyant members 10, 12 are then pivoted about their pivot axes by means of a motor or remotely operated vehicle (not shown) to their working positions (Figure 15) and an air hose (not shown) is connected by means of the remotely operated vehicle to each buoyant member 10, 12 to enable the tanks to be filled with air to increase the buoyancy of the apparatus 2. Alternatively, an air hose can be connected to each buoyant member 10,12 at the surface, so that the buoyant members 10, 12 can be filled with air as the apparatus 2 is being lowered to the first location on the sea bed. The air hoses can then be released from the buoyant members 10, 12 by means of release means such as hydraulic cylinders on the apparatus 2, thereby avoiding the need for a remotely operated vehicle. The deployment cable 8 is then disconnected, and the apparatus 2 with the well construction skid 74 is moved to its second location on the seabed. The well construction skid 72 is then brought into contact with the seabed by means of the vertical thrusters 18 and the well construction skid 74 is secured to the seabed by means of a remotely operated vehicle. After the well construction skid 74 has been secured to the seabed, the apparatus 2 is detached from the well construction skid and returned to the vessel for re-use.

Figure 15 shows a further well construction component 78 to be secured to the seabed by means of the deployment apparatus 2 of Figure 1 and a solid buoyancy member 80 provided on the component 78. The solid buoyancy member 80 assists in manipulation of the component 78 and apparatus 2 to the second location, and is left in place in the component 78 when the component is secured to the second location.

It will be appreciated by persons skilled in the art that the above embodiments have been described by way of example only, and not in any limitative sense, and that various alterations and modifications are possible without departure from the scope of the invention as defined by the appended claims.

## Claims

1. An apparatus for deploying an object to a sea floor, the apparatus comprising:-
a body;
attachment means mounted to the body for releasably attaching an object to the apparatus;
thrust generating means mounted to the body for providing thrust to transport the apparatus having an object attached thereto; and
buoyant means mounted to said body and having adjustable buoyancy.

2. An apparatus according to claim 1, wherein the buoyant means comprises at least one tank adapted to be filled with air and/or gas.

3. An apparatus according to claim 2, wherein at least one said tank is adapted to be filled with air and/or gas at a first location on a sea floor by means of a conduit connected to a vessel located at the sea surface.

4. An apparatus according to claim 3, further comprising at least one conduit adapted to be releasably connected to at least one said tank for filling said tank with air and/or gas from a vessel located at the sea surface.

5. An apparatus according to claim 4, further comprising release means for releasing at least one said conduit from the corresponding said tank.

6. An apparatus according to any one of the preceding claims, wherein the buoyant means comprises at least one buoyant member adapted to be moved between a respective first position, for transport from a vessel to said first location, and a second position, for transport from said first location to a second location on the sea floor.

7. An apparatus according to claim 5, wherein at least one said buoyant member is pivotable between said first and second positions.

8. An apparatus according to any one of the preceding claims, further comprising power supply means for operating at least one implement releasably mountable to said attachment means.

9. An apparatus according to claim 8, wherein the power supply means comprises at least one hydraulic power unit.

10. ain apparatus according to any one of the preceding claims, further comprising at least one implement adapted to be releasably attached to said attachment means.

11. An apparatus according to claim 10, wherein the
implement
comprises sea floor removal means and/or locating means for locating at least one elongate object in a trench.

12. A method of deploying an object to a sea floor, the method comprising:-
attaching an object to attachment means of an apparatus according to any one of the preceding claims;
deploying the apparatus and object by means of a cable from a vessel to a first location on a sea floor;
increasing buoyancy of said buoyant means; and
moving the object to a second location on the sea floor by means of said thrust generating means.

13. A method according to claim 12, further comprising deploying said apparatus and object to said first location through an aperture in a vessel located in sea ice.

14. A method according to claim 12 or 13, further comprising deploying said object to the sea floor at said second location by generating downward force on the apparatus by means of said thrust generating means.

15. A method according to any one of claims 12 to 14,
wherein the step of increasing said buoyancy comprises filling at least part of said buoyant means with air and/or gas.
